## Europäisches Patentamt

## European Patent Office

## Office européen des brevets

(19)

(11) Numéro de publication: **0 184 108**
**B1**

(12)

# FASCICULE DE BREVET EUROPÉEN

(45) Date de publication du fascicule du brevet:
**04.01.89**

(21) Numéro de dépôt: **85114949.2**

(22) Date de dépôt: **26.11.85**

(51) Int. Cl.⁴: **H 04 B 9/00,** H 04 L 25/49,
H 04 B 17/02, G 08 C 19/28

(54) **Procédé et dispositif de télésignalisation par substitution de message à des données acheminées par une liaison de transmission numérique.**

(30) Priorité: **30.11.84 FR 8418319**

(43) Date de publication de la demande:
**11.06.86 Bulletin 86/24**

(45) Mention de la délivrance du brevet:
**04.01.89 Bulletin 89/1**

(84) Etats contractants désignés:
**BE DE FR GB IT LU NL SE**

(56) Documents cité:
**DE-A-2 203 415**
**FR-A-2 140 265**
**GB-A-2 127 653**
**GB-A-2 131 657**

**PROCEEDINGS OF THE IEEE, vol. 68, no. 10,
octobre 1980, pages 1299-1303, IEEE New York, US;
C.D. ANDERSON et al.: "An undersea
communication system using fiberguide cables"**

(73) Titulaire: **ALCATEL CIT, 33, rue Emeriau, F-75015
Paris (FR)**

(72) Inventeur: **Lacroix, Jean- Claude, 11, Allée de la
Vigne Dieu, F-91680 Bruyeres Le Chatel (FR)**
Inventeur: **Franco, Pierre, 9, rue du Professeur
Fleming, F-94260 Fresnes (FR)**
Inventeur: **Le Gall, Stéphane, 49, rue Pasteur,
F-92330 Sceaux (FR)**
Inventeur: **Bourret, Gérard, 1 et 3, Chemin de la
Fosse aux Moines, F-91620 La Ville du Bois (FR)**
Inventeur: **Pochet, Jacques, 18, rue des Glycines
Le Plessis Pate, F-91220 Bretigny Sur Orge (FR)**

(74) Mandataire: **Weinmiller, Jürgen, Lennéstrasse 9
Postfach 24, D-8133 Feldafing (DE)**

## Description

La présente invention est relative à la télésurveillance d'équipements répartis le long d'une liaison de transmission numérique.

Pour répondre aux exigences de durée de vie et de fiabilité imposées aux liaisons de transmission à très longue portée, il est apparu nécessaire de prévoir, dans le cadre des systèmes à fibres optiques, une certaine redondance au niveau des diodes laser équipant les répéteurs. Cette redondance obtenue en équipant dès l'origine chaque répéteur avec plusieurs diodes laser de rechange mise en service une à une par un circuit de commutation implique l'existence d'une télécommande des circuits de commutation des répéteurs depuis des équipements terminaux de la ligne et d'une télésignalisation depuis chaque répéteur renseignant les équipements terminaux sur l'état des diodes laser en service.

On connaît, par le document US-A-4 281 416, une liaison numérique par fibre optique équipée d'une télécommande permettant de remplacer dans chaque répéteur la diode laser en service par une diode laser de réserve et d'une télésignalisation propre à chaque répéteur permettant de transmettre une alarme dès le franchissement d'un seuil par le courant de polarisation de la diode laser en service. Le signal de télécommande est constitué d'un message numérique qui est de même nature que le signal numérique transmis par la liaison et qui est inséré au milieu du trafic par le terminal télésurveillant. Ce message numérique répété plusieurs fois consécutivement pour éviter les fausses manoeuvres est formé d'une partie identifiant le répéteur concerné et d'une partie identifiant dans le répéteur concerné la diode laser à mettre en service. Le signal de télésignalisation est un motif formé d'une suite binaire pseudo-aléatoire dont la valeur initiale identifie le répéteur source.

Cette télésignalisation présente l'inconvénient de nécessiter dans chaque répéteur une source de suites pseudo-aléatoires fonctionnant au débit du signal numérique, c'est-à-dire, dans le cadre d'une transmission numérique par fibre optique, à un très grand débit uniquement réalisable en technologie ECL grande consommatrice d'énergie. Cela augmente de façon significative la consommation d'un répéteur et surtout sa dissipation thermique.

Elle a également l'inconvénient d'interrompre la liaison sur une durée suffisante pour provoquer une perte de synchronisation de la hiérarchie du train numérique et par conséquent de n'être adaptée qu'à la transmission d'alarmes majeures.

La présente invention a pour but d'éviter ces inconvénients et d'obtenir une télésignalisation à message momentanément substitué aux données du train numérique acheminé par la liaison qui nécessite un minimum de circuits très rapides au niveau des circuits élaborant le message et qui ne perturbe pas le train numérique ou son traitement en dehors des instants d'émission du message.

Elle a pour objet un procédé de télésignalisation par substitution de message à des données d'un train numérique acheminé par une liaison de transmission consistant à transmettre la signalisation à l'aide d'un message numérique de même débit que le train numérique, ce message numérique étant formé de séquences consécutives obtenues chacune par répétition d'un motif binaire spécifique parmi plusieurs motifs binaires possibles engendrés à l'aide des sous harmoniques deux et quatre du signal d'horloge de rythme du train numérique de la liaison et de leurs combinaisons logiques.

Le document GB-A-2 127 653 décrit un dispositif de transmission ayant un signal dit de "loop-back" formé par la répétition d'un motif binaire x de un et de zéro alternés et par la répétition d'un motif binaire y de couples de uns et de zéros alternés et un signal de test obtenu par une combinaison de un et de zéro alternant avec des couples de uns ou de zéros. La combinaison de séquences consécutives de durées identiques de trois sortes selon l'invention n'est pas décrite dans ce document.

Avantageusement, le message de télésurveillance se compose d'un préfixe invariant composé à partir de séquences obtenues à l'aide d'un premier motif spécifique et d'un suffixe composé d'une combinaison variable de séquences obtenues à l'aide de deux autres motifs spécifiques codant une information de télésurveillance.

Le mode d'obtention des motifs à partir des sous harmoniques deux et quatre du signal d'horloge de rythme du train numérique et de leurs combinaisons logiques impose la présence dans le message de télésignalisation d'au moins une transition par groupes successifs de quatre éléments binaires ce qui est amplement suffisant pour les circuits de récupération de rythme.

Pour la distinction du message de télésignalisation au milieu du train numérique on joue sur la longueur des séquences et leur composition afin d'obtenir une configuration de message interdite par le code redondant utilisé en ligne notamment pour permettre la surveillance des erreurs. Avec un code à sommé numérique bornée on élabore la séquence préfixe à l'aide de plusieurs répétitions du motif 1000 par combinaison logique de type "non ou" des sous harmoniques deux et quatre du signal d'horloge de rythme du train numérique de manière à dépasser la limite imposée à la somme numérique courante tandis qu'avec un code à bit d'insertion, on s'arrange pour que l'ensemble du message viole la loi de définition du bit inséré.

La perte de synchronisation de la hiérarchie du train numérique lors de l'insertion du message de télésignalisation est évitée en donnant à ce message une longueur inférieure à celle d'un secteur de la trame de la hiérarchie la plus élevée du train numérique.

La composition du message numérique à partir des séquences se fait à une vitesse moindre que celle du train numérique, accessible par une technologie plus économe en énergie du type I² L ou Schottky.

La présente invention a également pour objet un dispositif de mise en oeuvre du procédé précité.

D'autres caractéristiques et avantages de l'invention ressortiront de la description ci-après d'un mode de réalisation donné à titre d'exemple. Cette description sera faite en regard du dessin dans lequel:

- la figure 1 représente schématiquement l'implantation de circuits d'émission de messages de télésignalisation dans un répéteur bidirectionnel d'une liaison de transmission numérique à fibres optiques et
- les figures 2 et 3 représentent respectivement des schémas électriques de circuits d'émission et de réception des messages de télésignalisation conformes à l'invention.

La télésignalisation qui va être décrite s'applique à une liaison de transmission numérique à 295,600 Mbits/s par fibres optiques utilisant en ligne un code NRZ brouillé avec un élément binaire de parité de type 24 B1P et regroupant, par un multiplexage organisé en trames de 4,736 µs subdivisées en sept secteurs, deux trains numériques à 140 Mbits/s résultant d'un multiplexage numérique du quatrième ordre selon une hiérarchie conforme aux avis de la série G700 du CCITT. Prévue pour desservir au plus 256 équipements répartis sur la liaison et signaler quatre types d'anomalies par équipement réparti, elle emploie un message qui peut prendre 1024 valeurs possibles et est constitué de douze séquences consécutives.

Les deux premières séquences sont identiques. Elles servent de préfixe et sont constituées chacune du motif 1000 répété quatre fois. Les dix autres séquences servent de suffixe et reprennent soit le motif 0101 répété quatre fois, soit le motif 0011 également répété quatre fois selon la valeur binaire 0 ou 1 des dix chiffres d'un nombre codant les 1024 valeurs possibles.

Le message de télésignalisation ainsi constitué réalise un nombre minimal de deux viols de parité du code 24 B1 P ce qui assure sa non imitabilité en l'absence d'erreurs et une probabilité inférieure à $1.10^{-35}$ d'être imité une fois sur 25 ans par le train numérique en présence d'un taux d'erreur de $1.10^{-2}$. Sa transparence au rythme du train numérique est très bonne puisqu'il présente au moins une transition par groupes de quatre éléments binaires. Son effet perturbateur sur la synchronisation de la hiérarchie du train numérique est faible et reste dans les limites tolérables puisque sa longueur de 192 éléments binaires lui donne, au débit de 295,600 Mbits/s une durée de 649 ns inférieure à celle 677 ns d'un secteur de trame de la hiérarchie la plus élevée du train numérique.

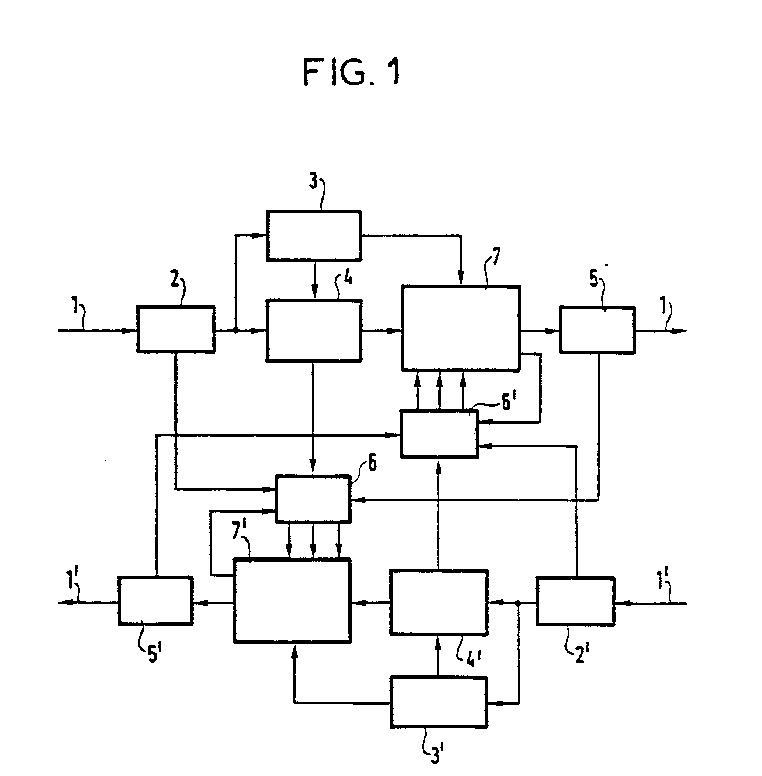

La figure 1 représente schématiquement un répéteur bidirectionnel de la liaison équipé pour chaque voie d'un circuit d'émission de télésignalisation contrôlé par un circuit de détection et de gestion des alarmes surveillant l'autre voie.

L'une des voies régénère les signaux optiques empruntant une fibre optique 1 dans un sens et l'autre les signaux optiques empruntant une fibre optique 1' dans l'autre sens. Chacune d'elles comporte de manière classique un démodulateur opto-électrique 2, 2' recevant le signal optique à régénérer de la fibre optique 1, 1', des circuits électroniques de remise en forme du signal constitués essentiellement par un circuit de récupération de cadence bit 3, 3' et d'un circuit de régénération 4, 4', un modulateur optique 5, 5' qui reçoit le signal régénéré et le réintroduit dans la fibre optique 1, 1'. Elles sont en outre dotées d'un circuit de détection et de gestion des alarmes 6, 6' surveillant le bon fonctionnement des éléments précités et capable d'émettre quatre types d'alarme, et d'un circuit d'émission de télésignalisation 7, 7' intercalé entre le circuit de régénération 4, 4' et le modulateur optique 5, 5' et contrôlé à la fois par leur propre circuit de récupération de cadence bit 3, 3' et par le circuit de détection et de gestion des alarmes 6', 6 de l'autre voie.

En cas d'anomalie sur l'une des voies, le circuit de détection et de gestion des alarmes 6, 6' déclenche l'émission d'une télésignalisation sur l'autre voie en direction du terminal situé en amont par rapport à la voie victime de l'anomalie qui peut alors prendre les mesures nécessaires pour y remédier soit par détournement du trafic, soit par télécommande d'une modification de structure par exemple échange de la diode laser en fonctionnement.

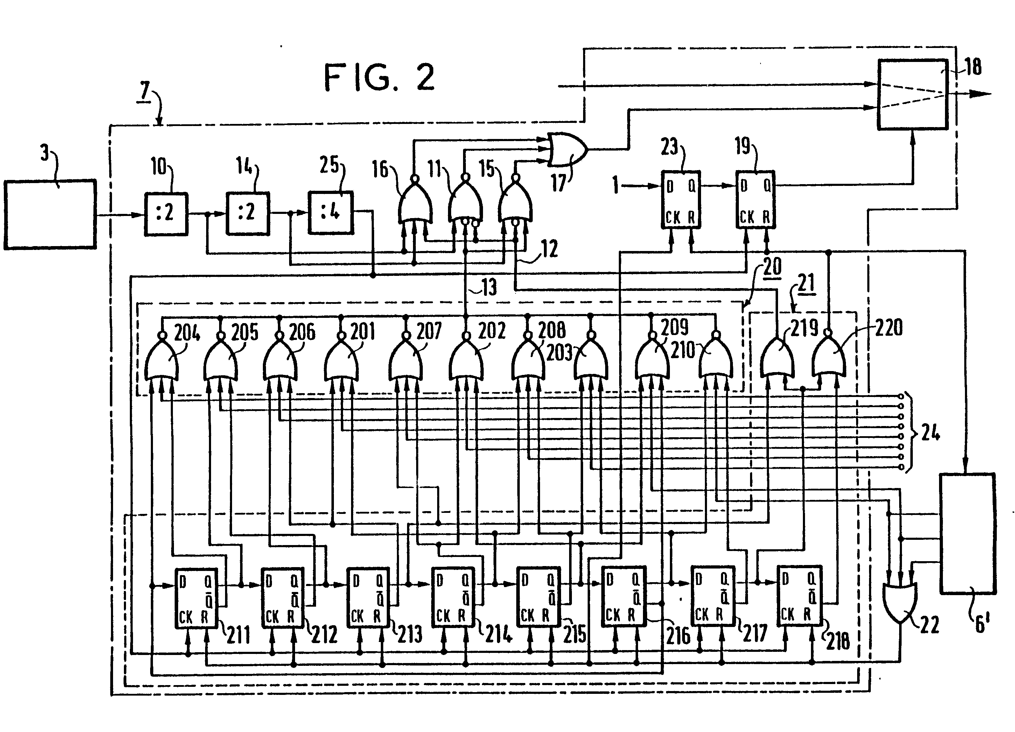

La figure 2 illustre un exemple de réalisation de l'un des circuits d'émission de télésignalisation. Celui-ci, 7, comporte:

- un premier générateur de motifs répétitifs 0101 de séquence de suffixe formé d'un diviseur par deux 10 connecté en sortie du circuit de récupération de cadence bit 3,
- un deuxième générateur de motifs répétitifs 0011 de séquence de suffixe formé d'un diviseur par deux 14 connecté en sortie du diviseur par deux 10 du premier générateur de motifs répétitifs 0101,
- un troisième générateur de motifs répétitifs 1000 de séquence de préfixe formé d'une porte logique 16 de type "non ou" à trois entrées non inverseuses dont deux sont connectées en sortie des diviseurs par deux 10 et 14 des premier et deuxième générateurs de motifs répétitifs afin d'effectuer la fonction logique de type "non ou" entre les motifs 0101 et 0011 assurant l'obtention du motif 1000,
- un circuit de sélection des trois générateurs de motifs répétitifs constitué à l'aide de deux portes logiques de type "non ou" à trois entrées disposées l'une 11 à la sortie du premier générateur de motifs répétitifs 0101 formé du diviseur par deux 10 et l'autre 15 à la sortie du deuxième générateur de motifs répétitifs 0011 formé du diviseur par deux 14, à l'aide d'une troisième entrée de la porte logique de type "non ou" 16 constituant le générateur de motif répétitif 1000 et à l'aide d'une porte logique de type "ou" à trois entrées 17 réunissant les sorties des portes logiques de type "non ou" précitées 11, 15, 16, ce circuit de sélection ayant une première entrée de commande 12 réunissant deux entrées inverseuses des portes logiques 11 et 15 et une entrée non inverseuse de la porte logique 16, assurant la sélection motif de préfixe ou motif de suffixe et permettant de bloquer au niveau logique 0 soit les sorties des premier et deuxième générateurs de motifs répétitifs 0101, 0011 soit la sortie du troisième générateur de motifs répétitifs 1000, et une deuxième entrée de commande 13 réunissant une entrée inverseuse et une entrée non inverseuse des porte logiques 11 et 15 et assurant le choix entre les deux motifs de suffixe en permettant de bloquer au niveau logique 0, alternativement, l'une ou l'autre des sorties du premier et deuxième générateurs de motfs répétitifs 0101 et 0011,

- un aiguillage formé d'un multiplexeur à deux entrées 18 connecté par une entrée à la sortie de la porte logique de type "ou" 17 constituant celle du circuit de sélection et intercalé par son autre entrée et sa sortie entre le circuit de régénération du train numerique (4, figure 1) et le modulateur optique (5, figure 1),

- un multiplexeur 20 à dix entrées dont deux sont contrôlées par le circuit de détection et de gestion des alarmes 6' et huit, 24, portées à des niveaux logiques codant le numéro d'identification du répéteur concerné, la sortie de ce multiplexeur contrôlant par la deuxième entrée 13 de commande du circuit de sélection le choix entre les deux motifs de suffixe,

- un séquenceur 21 qui est déclenché par le circuit de détection et de gestion des alarmes 6' et cadencé à un rythme égal au seizième du débit du train numérique grâce à un diviseur par quatre 25 disposé à la suite des diviseurs par deux 10 et 14, qui assure l'arrangement des séquences dans un message de la télésignalisation en contrôlant par la première entrée 12 de commande du circuit de sélection le choix entre la séquence de préfixe de motif 1000 et les séquences de suffixe de motifs 0101, 0011 et par l'adressage du multiplexeur 20 à dix entrées le choix entre les séquences de suffixe de motifs 0101 ou 0011 et qui engendre un message de fin de télésignalisation,

- un circuit bistable 19 qui est déclenché par le circuit de gestion et de détection des alarmes 6' par l'intermédiaire d'une porte logique de type "ou" 22 et d'un circuit 23 de synchronisation de déclenchement avec le séquenceur 21 et mis au repos par le séquenceur 21 à l'aide de son signal de fin de télésignalisation, et qui commande l'adressage de l'aiguillage 18 de manière à diriger vers le modulateur optique soit, lorsqu'il est au repos, le signal du circuit de régénération du train numérique soit, lorsqu'il est déclenché, le signal du circuit de sélection des générateurs de motifs répétitifs.

Le circuit 23 de synchronisation de déclenchement du circuit bistable 19 est constitué d'une bascule de type D dont l'entrée "données" est au niveau logique 1 et l'entrée d'horloge connectée à la sortie de la porte logique de type "ou" 22 et qui est mise à zéro par le signal de fin de télésignalisation élaboré par le séquenceur 21. Le circuit bistable 19 est également constitué d'une bascule de type D, dont l'entrée "données" est connectée à la sortie Q de la bascule 23, qui est cadencée par le signal d'horloge au seizième du débit du train numérique délivré par le diviseur par quatre 25 et qui est mise à zéro par le signal de fin de télésignalisation.

Le séquenceur 21 est formé principalement d'un registre à décalage à huit étages 211 à 218 recevant le signal d'horloge au seizième du débit du train numérique délivré par le diviseur par quatre 25 connecté à la suite des diviseurs par deux 10 et 14. Le registre à décalage a l'entrée de son premier étage bouclée à la sortie inversée $\bar{Q}$ de son sixième étage et sa commande de remise à zéro générale contrôlée par le circuit de gestion et de détection des alarmes 6' par l'intermédiaire de la porte de type "ou" 22 qui le bloque en l'absence d'alarme. Lorsqu'il est débloqué on assiste au défilement dans ses six premiers étages d'une configuration de six éléments binaires consécutifs au niveau logique 0 suivis de six autres au niveau logique 1.

Lorsque sa remise à zéro générale est libérée par le circuit de gestion et de détection des alarmes 6', une suite de six niveaux logiques 1 consécutifs remplace progressivement au fur et à mesure des décalages les niveaux logiques 0 en sortie des différents étages. Une porte logique 219 de type "ou" à deux entrées connectées aux sorties des troisième et septième étages du registre à décalage bloque par la première entrée 12 de commande du circuit de sélection les générateurs de motifs 0101 et 0011 des séquences de suffixe et active celui de motifs 1000 des séquences de préfixe pendant les deux premiers décalages du registre correspondant à l'émission des deux premières séquences du message de télésignalisation; elle bloque ensuite le générateur de motifs 1000 et active les générateurs de motifs 0101 et 0011; la prise en considération de l'état de la sortie du septième étage évite de bloquer les générateurs de motifs 0101 et 0011 de séquences de suffixe alors que la suite de niveaux logiques 0 se recycle dans les étages d'entrée du registre bien que le message de télésignalisation se poursuive. Une porte logique de type "non ou" 220 à deux entrées connectées l'une à l'entrée du huitième étage 218 du registre à décalage et l'autre à sa sortie inversée $\bar{Q}$ détecte l'apparition de la fin de la suite de niveaux logiques 1 en entrée du huitième étage comme la fin d'un message de télésignalisation et provoque le désarmement du circuit de détection et de gestion des alarmes 6' et la mise au repos du circuit 23 et du circuit bistable 19 commandant l'aiguillage 18 permettant l'insertion du message de télésignalisation dans le train numérique.

Le multiplexeur à dix entrées 20 est formé d'une batterie de portes logiques 201 à 210 de type "non ou" à sorties à collecteur ouvert réunies par un "ou câblé" à la deuxième entrée 13 de commande du circuit de sélection permettant le blocage de l'un ou l'autre des générateurs de motifs 0101, 0011 des séquences de suffixe. Ces portes logiques 201 à 210 sont pourvues de trois entrées dont deux de sélection connectées à divers niveaux du registre à décalage du séquenceur 21. Elles sont adressées une à une dans leur ordre de numérotation. Les portes 201, 202, 203 qui reçoivent sur leurs entrées de sélection le signal d'entrée inversé et le signal de sortie des quatrième, cinquième et sixième étages du registre à décalage sont débloquées successivement à l'apparition du début de la suite de niveaux logiques 1 aux entrées de ces étages tandis que les portes logiques 204 à 210 qui reçoivent sur leurs entrées de sélection le signal d'entrée et le signal de sortie inversé des premier au septième étages du registre à décalage sont débloquées successivement après les précédentes à l'apparition de la fin de la suite de niveaux logiques 1 à l'entrée de ces étages.

En l'absence d'alarme, le circuit de détection et de gestion des alarmes 6' maintient ses trois sorties au niveau logique 0 ce qui se traduit en sortie de la porte logique de type "ou" 22 par un niveau logique 0 qui maintient à zéro les étages du registre à décalage du séquenceur 21 et laisse au repos le circuit bistable 19 de sorte que l'aiguillage 18 maintient l'entrée du modulateur optique en liaison avec la sortie du circuit de régénération du train numérique.

Dès qu'une alarme apparaît, l'une des sorties du circuit de détection et de gestion des alarmes 6' passe à un niveau logique 1 qui se propage à travers la porte logique de type "ou" 22, libère les étages du registre à décalage du séquenceur 21 et prépositionne, par son front montant qui active le circuit 23 de synchronisation de déclenchement, le circuit bistable 19 pour un déclenchement en synchronisme avec le premier décalage du registre par le signal d'horloge au seizième du débit du train numérique délivré par le diviseur 25. Le circuit bistable 19 provoque, par l'intermédiaire de l'aiguillage 18, le remplacement du train numérique par le signal des générateurs de motifs répétitifs 1000, 0101, 0011. Du premier au troisième décalage du registre le signal de sortie du générateur de motif 1000 est sélectionné et du troisième au treizième celui de l'un ou l'autre des générateurs de motif 0101 ou 0011 en fonction des niveaux logiques imposés aux entrées du multiplexeur 20. Au treizième décalage du registre la porte logique 220 émet un signal de fin de message qui désarme le circuit de détection et de gestion ces alarmes 6' et fait basculer au repos le circuit 23 et le circuit bistable 19 rétablissant la liaison entre la sortie du circuit de régénération du train numérique et l'entrée du modulateur optique.

Une répétition du message de télésignalisation pour une même alarme peut s'obtenir éventuellement par une télécommande réarmant le circuit de détection et de gestion des alarmes 6'.

On remarque que seul un petit nombre d'éléments, ceux des générateurs de motifs répétitifs qui sont des diviseurs par deux réalisables à l'aide de bascules JK et quelques portes logiques du type "ou" ou "non ou", de l'aiguillage également réalisable à l'aide de portes logiques du type "ou" ou "non ou" ressortent d'une technologie très rapide type ECL compatible avec le débit à 295,600 Mbits/s mais forte consommatrice d'énergie tandis que les autres éléments fonctionnent à un débit réduit de 18,475 Mbits/s accessible avec une technologie rapide type $I^2L$ ou Schottky beaucoup plus économe en énergie.

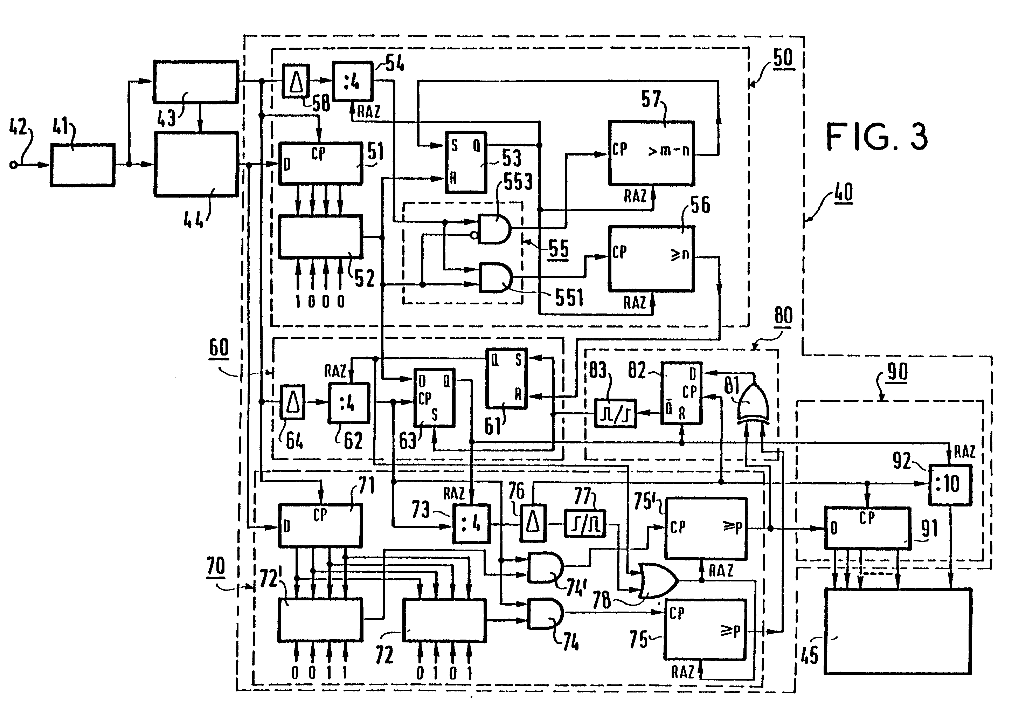

La figure 3 représente un exemple de réalisation d'un circuit de réception de télésignalisation 40, dans son environnement, intercalé à l'intérieur d'un équipement entre d'une part la tête de la voie de réception formée d'un démodulateur opto-électronique 41 sur lequel aboutit une fibre optique 42 acheminant le train numérique incident et de circuits électroniques de remise en forme du signal constitués principalement d'un circuit de récupération de cadence bit 43 et d'un circuit de régénération 44, et d'autre part un circuit d'exploitation de la signalisation 45 qui ne seront pas détaillés car ils sortent du cadre de la présente invention.

Le circuit de réception de télésignalisation 40 comporte essentiellement un circuit de reconnaissance de préfixe 50 déclenchant un circuit de détection de fin de préfixe 60 et un circuit d'identification et de discrimination des séquences de suffixe 70 contrôlé par le circuit de détection de fin de préfixe 60 et suivi d'un circuit de détection de fin de suffixe 80 qui commande la mise au repos du circuit de détection de fin de préfixe 60 et d'un circuit d'échantillonnage et de mémorisation 90 qui enregistre la valeur du message de télésignalisation au fur et à mesure de sa réception.

Le circuit de reconnaissance de préfixe 50 reconnaît l'apparition du préfixe d'un message de télésignalisation dans le train numérique reçu et récupère le découpage en motifs de ce message. Pour ce faire, il adopte la cadence de motifs coïncidant avec le premier motif 1000 détecté et vérifie que ce motif fait partie d'une suite de n motifs 1000 parmi m c'est-à-dire parmi une succession d'éléments binaires du train numérique débutant par lui même et ayant au plus la longueur de m motifs. m est un entier inférieur ou égal au nombre de motifs 1000 figurant dans un préfixe. n est un entier plus petit que m de manière à permettre la reconnaissance d'un préfixe entaché d'erreurs de transmission. Ici m est pris égal à huit qui est le nombre de motifs 1000 figurant dans les deux séquences du préfixe et n égal à sept. Le circuit de reconnaissance de préfixe 50 est réalisé à l'aide:

- d'un registre à décalage 51 à quatre étages, entrée série et sortie parallèle, qui reçoit sur son entrée "données" le train numérique remis en forme provenant du circuit de régénération 44 et sur son entrée d'horloge le rythme bit formé par le circuit de récupération de rythme bit 43,
- d'un comparateur 52 de deux nombres binaires de quatre chiffres ayant une entrée câblée aux niveaux logiques 1000 et l'autre entrée connectée à la sortie parallèle du registre à décalage 51,
- d'un circuit de déclenchement formé d'une bascule RS 53 connectée par son entrée R à la sortie du comparateur 52,
- d'un générateur de cadence de motifs formé d'un diviseur ou compteur par quatre 54 qui opère sur le rythme bit fourni par le circuit de récupération de rythme bit 43 et qui délivre un signal dissymétrique au niveau logique 1 pour l'état 1 et au niveau logique 0 pour les trois autres états présentant des transitions positives synchronisées, avec un léger retard, sur l'instant de détection du premier motif par le comparateur 51 grâce au contrôle de son entrée de remise à zéro par la sortie Q de la bascule RS 53 du circuit de déclenchement, une ligne à retard 58 agissant sur le signal au rythme bit en entrée du diviseur par quatre 54 pour compenser le retard au déblocage du diviseur 54 par rapport à la transistion du signal au rythme bit issu du circuit de récupération 43 qui a provoqué ce déblocage,
- d'un détecteur à coïncidence 55, échantillonnant la sortie du comparateur 52 au rythme du générateur de cadence de motifs pour émettre sur deux sorties distinctes des ordres de comptage de présence ou d'absence de motif de séquence de préfixe et comportant une première porte logique de type "et" 551 à deux entrées non inverseuses, qui délivre les ordres de comptage de présence de motif sous la force de transitions positives et dont les entrées sont connectées l'une à la sortie du comparateur 52 et l'autre à celle du diviseur par quatre 54 du générateur de cadence de motifs et une deuxième porte logique de type "et" 553 à deux entrées l'une inverseuse l'autre non, qui délivre les ordres de comptage d'absence de motif sous la forme de transitions positives et qui est connecté par son entrée inverseuse à la sortie du comparateur 52 et par son entrée non inverseuse à celle du diviseur par quatre 54 du générateur de cadence de motifs,
- d'un compteur par n 56 avec une entrée de remise à zéro commandée par la sortie Q de la bascule RS 53 du circuit de déclenchement, une entrée de comptage sensible aux transitions positives connectée à la sortie d'ordres de comptage de présence de motif du détecteur à coïncidence 55 et une sortie de débordement passant au niveau logique 1 lorsque son compte atteint ou dépasse n et constituant celle du circuit de reconnaissance de préfixe et,
- d'un compteur par m-n 57 avec une entrée de remise à zéro commandée par la sortie Q de la bascule RS 53 du circuit de declenchement, une entrée de comptage sensible aux transitions positives connectée à la sortie d'ordres de comptage d'absence de motif du détecteur à coïncidence 55 et une sortie de débordement passant au niveau logique 1 lorsque son compte dépasse m-n et contrôlant l'entrée S de la bascule RS 53 du circuit de déclenchement.

En l'absence d'un motif 1000 dans les éléments binaires du train numérique se succédant sur une longueur strictement supérieure à m-n motifs le circuit de déclenchement formé de la bascule RS 53 est désarmé, sa sortie Q délivrant un niveau logique 1 qui bloque à zéro le diviseur par quatre 54 du générateur de cadence de motifs et les compteurs par n et m-n de présence et d'absence de motif 56, 57.

Dès qu'un motif 1000 apparaît dans le train numérique délivré par le circuit de régénération 44, le comparateur 52 le détecte et délivre en réponse une impulsion positive armant la bascule RS 53 du circuit de déclenchement dont la sortie Q passe au niveau logique 0 débloquant les compteurs par n et m-n de présence et d'absence de motif 56, 57 et le diviseur par quatre 54 du générateur de cadence du motif dont les transitions positives sont alors synchronisées, avec un léger retard, sur l'instant de détection du motif initial 1000 par le comparateur 52. Cette dernière impulsion positive parvient également au détecteur à coïncidence 55 qui la prend en compte pour engendrer un ordre de comptage de présence de motif à destination du compteur par n 56. A chaque transition positive ultérieure du signal de sortie du diviseur par quatre 54 du générateur de cadence de motifs, le détecteur à coïncidence 55 prend en compte la présence ou l'absence d'une nouvelle impulsion positive en sortie du comparateur 52 pour engendrer un ordre de comptage de présence ou d'absence de motif à destination du compteur par n 56 ou par m-n 57.

Le débordement du compteur par m-n 57 traduit un nombre d'absences de reconnaissance de motifs de séquence de préfixe supérieur à m-n et par conséquent l'impossibilité d'être en présence d'une configuration de préfixe. Il désarme la bascule RS 53 du circuit de déclenchement qui rebloque à nouveau à zéro le diviseur par quatre 54 du générateur de cadence de motifs et les compteurs par n et m-n 56 et 57.

Le débordement du compteur par n 56 qui ne peut se produire qu'en l'absence de débordement du compteur par m-n 57 traduit la reconnaissance d'une configuration de préfixe et constitue le signal de sortie du circuit de reconnaissance de préfixe 50.

Le circuit de détection de fin de préfixe 60 est réalisé à l'aide:

- d'un circuit de déclenchement formé d'une bascule RS 61 connectée par son entrée R à la sortie de débordement du compteur par n 56 du circuit de reconnaissance de préfixe 50 et par son entree S à la sortie du circuit de détection de fin de suffixe 80,
- d'un générateur de cadence de motifs formé d'un diviseur ou compteur par quatre 62 qui opère sur le rythme fourni par le circuit de récupération de rythme bit 43 et qui délivre un signal dissymétrique au niveau logique pour l'état 1 et au niveau logique 0 pour les trois autres états, présentant des transitions positives synchronisées, avec un léger retard, sur l'instant de détection du premier motif de séquence de préfixe par le comparateur 52 grâce au contrôle de son entrée de remise à zero par la sortie Q de la bascule RS 61 du circuit de déclenchement, une ligne à retard 64 agissant sur le signal au rythme bit en entrée du diviseur par quatre 62 pour compenser le retard au déblocage du diviseur 62 par rapport à la transiton du signal au rythme bit issu du circuit de récupération 43 qui a provoqué ce déblocage et
- d'une bascule de type D 63 qui est connectée par son entrée donnée D à la sortie du comparateur 52 du circuit de reconnaissance de préfixe 50, par son entrée d'horloge CP à la sortie du diviseur par quatre 62 et par son entrée de remise à 1 S à la sortie du circuit de détection de fin de suffixe 80, et dont la sortie Q constitue celle du circuit de détection de fin de préfixe 60.

La bascule RS 61 du circuit de déclenchement a ses entrées R et S au niveau logique 0 sauf dans le cas où le circuit de reconnaissance de préfixe 50 détectant un préfixe dans le train numérique reçu fait passer son entrée R au niveau logique 1, son entrée S restant au niveau logique 0 et dans le cas où le circuit de détection de fin de suffixe 80 détectant une fin de message de télésignalisation applique une impulsion positive sur son entrée S, son entrée R restant au niveau logique 0.

En l'absence de message de télésignalisation dans le train numérique reçu la bascule RS 61 du circuit de déclenchement a ses entrées R et S au niveau logique 0 et conserve sur sa sortie Q le niveau logique 1 acquis à la fin du dernier message de télésignalisation reçu ou à l'issue d'une période transitoire lors de la mise en service des équipements sous l'impulsion du circuit de détection de fin de suffixe 80. Ce niveau logique 1 bloque à zéro le diviseur par quatre 62 du générateur de cadence de motif et prive de signal d'horloge la bascule D 63 qui conserve sur sa sortie Q le niveau logique 1.

En présence d'une configuration de préfixe débutant un message de télésignalisation, le compteur par n 56 du circuit de reconnaissance de préfixe 50 déborde au $n^{\text{ième}}$ motif de séquence de préfixe reconnu par le comparateur 52 et applique un niveau logique 1 sur l'entrée R de la bascule RS 61 du circuit de déclenchement qui bascule, sa sorte Q passant au niveau logique 0 et libérant le diviseur par quatre 62 du générateur de cadence de motifs dont les transitions postives du signal qu'il délivre sont alors synchronisées comme celle du signal du générateur de cadence de motifs du circuit de reconnaissance de préfixe 50, avec un léger retard, sur l'instant de détection par le comparateur 52 du premier motif de séquence de préfixe. La bascule D 63 échantillonne la sortie du comparateur 52 à la cadence fournie par le diviseur par quatre 62. Sa sortie Q reste au niveau logique 1 tant que le comparateur 52 reconnaît des motifs de séquence de préfixe à cette cadence et bascule au niveau logique 0 dès qu'il n'en reconnaît plus.

Le circuit 70 d'identification et de discrimination de séquence de suffixe est réalisé à l'aide:

- d'un registre à décalage 71 à quatre étages qui peut être confondu avec celui 51 du circuit de reconnaissance de préfixe et qui reçoit sur son entrée "données" le train numérique remis en forme provenant du circuit de régénération 44 et sur son entrée d'horloge le rythme fourni par le circuit de récupération de rythme bit 43,
- d'un premier comparateur 72 de deux nombres binaires de quatre chiffres ayant une entrée câblée aux niveaux logiques 0101 et l'autre entrée connectée à la sortie parallèle du registre à décalage 71,
- d'un deuxième comparateur 72' de deux nombres binaires de quatre chiffres ayant une entrée câblée aux niveaux logiques 0011 et l'autre entrée connectée à la sortie parallèle du registre à décalage 71,
- d'un générateur de cadence de séquences formé d'un diviseur ou compteur par quatre 73 qui opère sur le rythme des motifs reçus délivré par le diviseur par quatre 62 du détecteur de fin de préfixe 60 et qui fournit un signal dissymétrique au niveau logique 1 pour l'état 3 et au niveau logique 0 pour les trois autres états, présentant des transitions positives synchronisées sur la troisième transition positive du signal fourni par le diviseur par quatre 62 du générateur de cadence de motifs du circuit de détection de fin de préfixe 60 qui suit l'instant de détection de fin de préfixe grâce au contrôle de son entrée de remise à zéro par la sortie Q de la bascule D 63 du circuit de détection de fin de préfixe 60,
- d'un premier détecteur à coïncidence qui échantillonne la sortie du premier comparateur 72 au rythme des transitions positives du diviseur par quatre 62 du générateur de cadence de motif du circuit de détection de fin de préfixe 60 et qui est formé d'une porte logique de type "et" 74 à deux entrées connectées l'une en sortie du premier comparateur 72 et l'autre en sortie du diviseur par quatre 62 du circuit de détecton de fin de préfixe 60,

- d'un deuxième détecteur à coïncidence qui échantillonne la sortie du deuxième comparateur 72' au rythme des transitions positives du diviseur par quatre 62 du générateur de cadence de motifs du circuit de détection de fin de préfixe 60 et qui est formé d'une porte logique de type "et" 74' à deux entrées connectées l'une en sortie du deuxième comparateur 72' et l'autre en sortie du diviseur par quatre 62 du circuit de détection de fin de préfixe 60,

- d'un premier compteur par p 75, p étant avantageusement égal à deux, avec une entrée de remise à zéro commandée à travers une porte logique de type "ou" 78 d'une part par le signal sur la sortie Q de la bascule RS 61 du circuit de détection de fin de préfixe 60 et d'autre part par les transitions positives de la sortie du diviseur par quatre 73 du générateur de cadence de séquence par l'intermédiaire d'une ligne à retard 76 et d'un circuit de détection des fronts montants 77, une entrée de comptage sensible aux fronts montants connectées à la sortie de la porte logique 74 formant le premier détecteur à coïncidence et une sortie de débordement passant au niveau logique 1 lorsque son compte atteint ou dépasse p et constituant la sortie de signalisation de détection de séquence de suffixe à motif 0101,

- et d'un deuxième compteur par p 75' identique au premier compteur 75 avec une entrée de comptage connectée à la sortie de la porte logique "et" 74' formant le deuxième détecteur à coïncidence, une sortie de débordement constituant la sortie de signalisation de détection de séquence de suffixe de motif 0011 et une entrée de remise à zéro connectée à la sortie de la porte logique de type "ou" 78.

En dehors de la réception d'un message de télésignalisation, le circuit d'identification et de discrimination des séquences de suffixe 70 est bloqué au niveau de ses détecteurs à coïncidence par le niveau logique 0 présent en sortie du diviseur par quatre 62, maintenu à zéro, du générateur de cadence de motifs du circuit de détection de fin de préfixe 60, au niveau des compteurs 75 et 75' maintenus à zéro par la bascule RS 61 du circuit de détection de fin de préfixe 60 et au niveau du diviseur par quatre 73 formant son générateur de cadence de séquences qui est maintenu à zéro par la bascule D 63 du circuit de détection de fin de préfixe 60.

Au cours de la réception d'un message, il est tout d'abord débloqué au niveau de ses compteurs 75 et 75' et de ses détecteurs à coïncidence par le circuit de reconnaissance de préfixe 50 qui met à zéro la bascule RS 61 ce qui libère le diviseur par quatre 62 dès détection d'un préfixe et provoque une mise en route des recherches de motifs 0101 et 0011 des séquences de suffixe par les détecteurs à coïncidence échantillonnant les signaux de sortie des comparateurs 72, 72', au rythme du signal fourni par le diviseur par quatre 62 du générateur de cadence de motifs du circuit 60. Il est ensuite débloqué au niveau du diviseur par quatre 73 formant son générateur de cadence de séquences par le basculement en fin de détection de préfixe de la bascule D 63 du circuit de détection de fin de préfixe qui provoque une remise à zéro des compteurs 75, 75' à la fin de chaque séquence de suffixe.

Le circuit de détection de fin de suffixe 80 est réalisé à l'aide:

- d'une porte logique de type "ou exclusif" 81 avec deux entrées connectées en sortie des compteurs 75 et 75' du circuit d'identification et de discrimination des séquences de suffixe 70,

- d'une bascule de type D 82 qui est connectée en entrée D à la sortie de la porte logique de type "ou exclusif" 81, en entrée d'horloge CP à une prise intermédiaire de la ligne à retard 76 disposée à la sortie du diviseur par quatre 73 du générateur de cadence de séquence du circuit d'identification et de discrimination des séquences de suffixe 70 et en entrée de remise à zéro R à la sortie Q de la bascule D 63 du circuit de détection de fin de préfixe 60 et

- d'un circuit de détection des fronts montants 83 connecté en sortie Q̄ de la bascule D 82 délivrant le signal de sortie du circuit de détection de fin de suffixe 80.

La bascule D 82 du circuit de détection de fin de suffixe est maintenue à zéro en dehors de la réception d'un message de télésignalisation et pendant la réception d'un préfixe de message de télésignalisation par la bascule D 63 du circuit de détection de fin de préfixe.

Dès détection d'une fin de préfixe, elle est débloquée et échantillonne sur les fronts montants du signal du diviseur par quatre 73 du générateur de cadence de séquence du circuit d'identification et de discrimination des séquences de suffixe 70 les sorties de débordement des compteurs 75 et 75' de ce dernier, passe au niveau logique 1 et y reste tant que l'une ou l'autre des séquences de suffixe est reconnu et retombe à zéro dès qu'aucune des deux n'est reconnue. Son passage au niveau logique 1 qui se produit lors de la reconnaissance d'un début de suffixe de message de télésignalisation n'a pas d'effet sur le circuit de détection des fronts montants 83 connecté à sa sortie Q̄. Par contre son rebasculement à zéro en fin de reconnaissance de séquence de suffixe entraîne l'émission par le circuit de détection des fronts montants 83 d'une impulsion positive qui réinitialise le circuit de détection de fin de préfixe et bloque par contre-coup le circuit d'identification et de discrimination des séquences de suffixe 70.

Le circuit d'échantillonnage et de mémorisation 90 qui en registre la valeur du message de télésignalisation au fur et à mesure de sa réception est réalisé à l'aide:

- d'un registre à décalage 91 à dix étages entrée série et sortie parallèle qui reçoit sur son entrée "données" le signal de la sortie de débordement du compteur 75' et sur son entrée d'horloge, connectée à la prise intermédiaire de la ligne à retard 76, le signal, légèrement retardé, du diviseur par quatre 73 du générateur de cadence de séquences du circuit d'identification et de discrimination des séquences de suffixe 70 et
- d'un diviseur par dix 92 qui opère sur le rythme, légèrement retardé, du diviseur par quatre 73 du générateur de cadence du circuit d'identification et de discrimination des séquences de suffixe 70 disponible sur la prise intermédiaire de la ligne à retard 76 et qui est remis à zéro par la sortie Q de la bascule D 63 du circuit de détection de fin de préfixe 60.

En dehors de la réception d'un suffixe de message de télésignalisation le registre à décalage 91 reste bloqué car il ne reçoit pas de signal d'horloge. Dès réception d'un suffixe de message de télésignalisation, il échantillonne le signal de la sortie de débordement du compteur 75' dont le passage au niveau logique 1 coïncide avec la détection d'une séquence de motif 0011 qui correspond, comme mentionné en début de la description, à une valeur binaire 1 pour les chiffres du nombre binaire codant le message de télésignalisation. Les échantillons progressent à l'intérieur du registre à décalage 91 sur chaque front montant du signal du diviseur par quatre 73, légèrement retardé pour lasser au compteur 75' le temps de prendre en compte au préalable le signal de sortie de la porte 74', jusqu'à occuper tout le registre, le diviseur par dix 92 engendrant alors un signal d'autorisation de prise en compte à l'intention du circuit d'exploitation de la signalisation 45 connecté à la sortie parallèle du registre à décalage 91.

On retrouve dans ce circuit de réception un certain nombre de circuits fonctionnant à grand débit nécessitant une technologie très rapide grande consommatrice d'énergie. Mais cela est sans importance car l'exploitation de la télésignalisation ne se fait sur une liaison numérique que dans un petit nombre d'équipements en général non téléalimentés.

## Revendications

1. Procédé de télésignalisation par substitution de message à des données d'un train numérique acheminé par une liaison de transmission consistant à transmettre la signalisation à l'aide d'un message numérique de même débit que le train numérique, caractérisé en ce que ledit message est formé de séquences consécutives de durées identiques de trois sortes possibles, une première sorte obtenue à l'aide de la sous harmonique 2 du signal d'horloge de rythme du train numérique recupéré et formée par répétition d'un motif binaire de un et de zéro alternés, une deuxième sorte obtenue à l'aide de la sous harmonique 4 du signal d'horloge de rythme récupéré et formée par répétition d'un motif binaire de couples de uns et de zéros alternés et une troisième sorte obtenue par une combinaison logique des sous harmoniques deux et quatre du signal d'horloge de rythme du train numérique.

2. Procédé selon la revendication 1, caractérisé en ce que le message de télésignalisation est constitué d'un préfixe invariant formé avec l'une des sortes de séquences et d'un suffixe formé avec les deux autres sortes de séquences, la combinaison de ces deux dernières sortes de séquence au sein du suffixe codant l'information de télésignalisation.

3. Dispositif de mise en oeuvre du procédé selon la revendication 1, sur une liaison numérique ayant au moins un équipement pourvu d'un circuit de détection et de gestion des alarmes (6') et d'un circuit (3) de récupération de cadence bit du train numérique, caractérisé en ce qu'il comporte au moins un circuit d'émission de message de télésignalisation (7) placé dans ledit équipement et pourvu

- d'un premier générateur de motifs binaires à quatre bits de type 0101 formé d'un diviseur par deux (10) opérant sur le signal d'horloge délivré par le circuit de récupération de rythme bit (3),
- d'un deuxième générateur de motifs binaires à quatre bits de type 0011 formé d'un diviseur par deux (14) opérant sur le signal de sortie du premier générateur de motifs binaires,
- d'un troisième générateur de motifs binaires à quatre bits de type 1000 formé d'une porte logique (16) opérant sur les signaux de sortie du premier et du deuxième générateur de motifs binaires, et
- d'un circuit de sélection des trois générateurs de motifs binaires (11, 15, 16, 17) connecté en sortie des trois générateurs de motifs binaires et présentant une première et une deuxième entrées binaires de commande (12, 13),
- d'un aiguillage (18) permettant d'insérer momentanément le signal issu du circuit de sélection à la place des données du train numérique acheminé par la liaison,
- d'un multiplexeur (20) dont les entrées sont portées à des niveaux logiques codant une information de télésignalisation et dont la sortie contrôle la deuxième entrée de commande (13) du circuit de sélection,
- d'un séquenceur (21) qui est déclenché par le circuit de détection et de gestion des alarmes (6') et cadencé à un rythme égal à un sous multiple du quart du rythme du signal d'horloge délivré par le circuit de récupération de rythme bit (3), qui assure l'arrangement des séquences au sein d'un message de télésignalisation en contrôlant l'adressage du multiplexeur et la première entrée de commande (12) du circuit de sélection et qui engendre un signal de fin de télésignalisation et

- d'un circuit bistable (19) déclenché par le circuit de détection et de gestion des alarmes (6') et mis au repos par le séquenceur (21) à l'aide de son signal de fin de télésignalisation, qui commande l'adressage de l'aiguillage (18) de manière à insérer lorsqu'il est déclenché, le signal du circuit de sélection du générateur de motifs dans le train numérique.

4. Dispositif de mise en oeuvre du procédé selon la revendication 2, sur une liaison numérique ayant au moins un équipement pourvu d'un circuit d'exploitation de la signalisation (45) et d'un circuit (43) de récupération de la cadence bit du train numérique, caractérisé en ce qu'il comporte au moins un circuit de réception de message placé dans ledit équipement et muni:

- d'un circuit de reconnaissance de préfixe (50) auquel est appliqué le train numérique acheminé par la liaison,

- d'un circuit de détection de fin de préfixe (60) déclenché par le circuit de reconnaissance de préfixe (50),

- d'un circuit d'identification et de discrimination des séquences de suffixe (70) auquel est appliqué le train numérique acheminé par la liaison et dont la mise en route est contrôlée par le circuit de détection de fin de préfixe (60),

- d'un circuit de détection de fin de suffixe (80) placé à la suite du circuit d'identification et de discrimination des séquences de suffixe (70) contrôlant la réinitialisation du circuit de détection de fin de préfixe (60) et

- d'un circuit d'échantillonnage et de mémorisation (90) placé à la suite du circuit d'identification et de discrimination des séquences de suffixe (70), qui mémorise la valeur du message de télésignalisation au fur et à mesure de son décodage par le dernier circuit précité.

5. Dispositif selon la revendication 4, caractérisé en ce que le circuit de reconnaissance de préfixe (50) est formé d'un circuit de reconnaissance de n motifs de séquence de préfixe parmi m comportant:

- un registre à décalage (51) à entrée série et sortie parallèle qui reçoit le train de données numérique acheminé par la liaison, qui est cadencé par le signal d'horloge élaboré par le circuit de récupération de cadence bit (43) et qui délivre sur sa sortie parallèle des mots binaires de la longueur d'un motif,

- un comparateur (52) de deux nombres binaires de la longueur d'un motif, l'un câblé et identique à un motif de séquence de préfixe et l'autre délivré par la sortie parallèle du registre à décalage (51),

- un circuit de déclenchement (53) activé par le comparateur (52) en cas d'identité des deux nombres comparés,

- un générateur de cadence de motifs formé d'un diviseur (54) opérant sur le signal du circuit de récupération de rythme bit (43) et maintenu à zéro par le circuit de déclenchement (53) lorsque ce dernier est au repos,

- un détecteur à coïncidence (55) connecté à la sortie du comparateur (52) et du générateur de cadence de motifs délivrant sur deux sorties distinctes des ordres de comptage de présence et d'absence de motif,

- un compteur par n (56) comptant les ordres de comptage de présence de motif délivrés par le détecteur à coïncidence (55), maintenu à zéro par le circuit de déclenchement (53) lorsque ce dernier est au repos, et engendrant un signal de détection de préfixe lorsque son compte atteint ou dépasse n et

- un compteur par m-n (57) comptant les ordres de comptage d'absence de motif délivrés par le détecteur à coïncidence (55), maintenu à zéro par le circuit de déclenchement (55) lorsque ce dernier est au repos et engendrant un signal de mise au repos du circuit de déclenchement (55) lorsque son compte dépasse m-n.

## Patentansprüche

1. Verfahren zur Fernanzeige durch Substitution einer Meldung gegen Daten eines durch eine Übertragungsverbindung herangeführten digitalen Datenstroms, wobei die Anzeige mit Hilfe einer digitalen Meldung der gleichen Bitrate wie der des digitalen Datenstroms übertragen wird, dadurch gekennzeichnet, daß die Meldung aus drei möglichen Arten aufeinanderfolgender Sequenzen gleicher Dauer besteht, nämlich einer ersten Art, die mit Hilfe der zweiten Subharmonischen des wiedergewonnenen Taktsignals des digitalen Datenstroms erhalten wird und durch Wiederholung eines Binärmusters aus alternierenden Einsen und Nullen gebildet wird, einer zweiten Art, die aus der vierten Subharmonischen des wiedergewonnenen Taktsignals erhalten und durch Wiederholung eines Binärmusters aus alternierenden Einser- und Nullenpaaren gebildet wird, und einer dritten Art, die durch eine logische Verknüpfung der zweiten und vierten Subharmonischen des Taktsignals des digitalen Datenstroms erhalten wird.

2. Verfahren nach Anspruch 1, dadurch gekennzeichnet, daß die Fernanzeigemeldung aus einem unveränderlichen Präfix, das mit einer der Sequenzarten gebildet wird, und einem Suffix besteht das mit den beiden anderen Sequenzarten gebildet wird, wobei die Verknüpfung dieser beiden letzten Sequenzarten innerhalb des Suffixes die Fernanzeigeinformation kodiert.

3. Vorrichtung zur Durchführung des Verfahrens nach Anspruch 1 bei einer digitalen Verbindung mit mindestens einer Anlage, welche einen Alarmerfassungs- und -behandlungskreis (6') und einen Bittaktwiedergewinnungskreis (3) des digitalen Datenstromes aufweist, dadurch gekennzeichnet, daß die Vorrichtung mindestens einen Meldungssendekreis (7) für die Fernanzeige in der Anlage besitzt, und aufweist:

- einen ersten Binärmustergenerator zur Erzeugung von vier Bits vom Typ 0101, der aus einem (1 : 2)-Teiler (10) gebildet wird und das vom Bittaktwiedergewinnungskreis (3) gelieferte Taktsignal empfängt,

- einem zweiten Binärmustergenerator zur Erzeugung von vier Bits vom Typ 0011, der aus einem (1 : 2)-Teiler (14) gebildet wird und das vom Ausgang des ersten Binärmustergenerators gelieferte Signal empfängt,

- einen dritten Binärmustergenerator zur Erzeugung von vier Bits vom Typ 1000, der von einem logischen Tor (16) gebildet wird und die vom Ausgang des ersten und zweiten Binärmustergenerators gelieferten Signale empfängt, und

- einem Auswahlkreis zum Auswählen eines der drei Binärmustergeneratoren (11, 15, 16, 17), der an den Ausgang der drei Binärmustergeneratoren angeschlossen ist und einen ersten und zweiten binären Steuereingang (12, 13) besitzt,

- eine Weiche (18) zum kurzfristigen Einschleusen des vom Auswahlkreis gelieferten Signals an die Stelle der Daten des von der Verbindung herangeführten binären Datenstromes,

- einen Multiplexer (20), dessen Eingänge auf logische Pegel gebracht sind, die eine Fernanzeigeinformation kodieren, und dessen Ausgang den zweiten Steuereingang (13) des Auswahlkreises steuert,

- einen Folgeschaltkreis (21), der vom Alarmerfassungs- und -behandlungskreis (6') ausgelöst wird und mit einer Taktfrequenz getaktet wird, welche ein Untervielfaches des vierten Teils der Taktfrequenz des vom Bittaktwiedergewinnungskreis (3) gelieferten Taktsignals beträgt, daß der Folgeschaltkreis die Anordnung der Sequenzen innerhalb der Fernanzeigemeldung durch Steuerung der Adressierung des Multiplexers und des ersten Steuereingangs (12) des Auswahlkreises bewirkt, und der ein Fernanzeige-Endesignal erzeugt, und

- einen bistabilen Kippkreis (19), der vom Alarmerfassungs- und -behandlungskreis (6') ausgelöst und vom Folgeschaltkreis (21) mit Hilfe seines Fernmeldungs-Endesignals stillgesetzt wird und der die Adressierung der Weiche (18) steuert, derart, daß er im eingeschalteten Zustand das Signal des Auswahlkreises des Mustergenerators in den digitalen Datenstrom einfügt.

4. Vorrichtung zur Durchführung des Verfahrens nach Anspruch 2, bei einer digitalen Verbindung mit mindestens einer Anlage, welche einen Meldungsauswertungskreis (45) und einen Kreis (43) zur Wiedergewinnung des Bittaktes des digitalen Datenstroms aufweist, dadurch gekennzeichnet, daß die Vorrichtung mindestens einen Meldungsempfangskreis in der Anlage besitzt, und umfaßt:

- einen Präfixerkennungskreis (50), an den der von der Verbindung herangeführte digitale Datenstrom angelegt ist,

- einen Präfixende-Erfassungskreis (60), der vom Präfixerkennungskreis (50) ausgelöst wird,

- einen Identifikations- und Diskriminierungskreis (70) der Suffixsequenzen, an den der von der Verbindung herangeführte digitale Datenstrom angelegt ist und dessen Inbetriebnahme vom Präfixende-Erfassungskreis (60) gesteuert wird,

- einen Suffixende-Erfassungskreis (80), der dem Identifikations- und Diskriminierungskreis (70) der Suffixsequenzen nachgeschaltet ist und die Wiederauslösung des Präfixende-Erfassungskreises (60) steuert, und

- einen Probenahme- und -speicherkreis (90), der dem Identifikations- und Diskriminierungskreis (70) der Suffixsequenzen nachgeschaltet ist und den Wert der Fernanzeigemeldung nach Maßgabe ihrer Dekodierung durch den vorgenannten letzteren Kreis speichert.

5. Vorrichtung nach Anspruch 4, dadurch gekennzeichnet, daß der Präfixerkennungskreis (50) aus einem Kreis zur Erkennung von n Präfixsequenzmustern unter m Mustern gebildet ist und aufweist:

- ein Schieberegister (51) mit seriellem Eingang und parallelem Ausgang, das den durch die Verbindung herangeführten digitalen Datenstrom empfängt und von einem Taktsignal getaktet wird, welches vom Bittaktwiedergewinnungskreis (43) erzeugt wird, und das an seinem parallelen Ausgang Binärwörter von der Länge eines Musters liefert,

- einen Komparator (52) für zwei Binärzahlen von der Länge eines Musters, von denen eine festverdrahtet und mit einem Präfixsequenzmuster identisch ist, und von denen die andere vom parallelen Ausgang des Schieberegisters (51) geliefert wird,

- einen Auslösekreis (53), der vom Komparator (52) im Fall der Identität zweier verglichener Zahlen aktiviert wird,

- ein Mustertaktgenerator, der aus einem Teiler (54) gebildet ist, welcher das Signal des Bittaktwiedergewinnungskreises (43) empfängt und durch den Auslösekreis im Nullzustand gehalten wird, wenn letzterer sich in Ruhestellung befindet,

- einen Koinzidenzdetektor (55), der an den Ausgang des Komparators (52) und des Mustertaktgenerators angeschlossen ist und an zwei verschiedenen Ausgängen Befehle zur Zählung der Anwesenheit und der Abwesenheit der Muster liefert,

- einen Modulo-n-Zähler (56), der die vom Koinzidenzdetektor (55) gelieferten Zählbefehle der Musteranwesenheit zählt, der durch den Auslösekreis (53) im Nullzustand gehalten wird, wenn letzterer sich in Ruhestellung befindet, und der ein Präfixerfassungssignal erzeugt, wenn seine Zählwert den Wert n erreicht oder überschreitet, und

- eine Modulo-(m-n)-Zähler (57), der die vom Koinzidenzdetektor (55) gelieferten Zählbefehle der Musterabwesenheit zählt, der durch den Auslösekreis (53) im Nullzustand gehalten wird, wenn letzterer sich in Ruhestellung befindet, und der ein Signal zur Stillsetzung des Auslösekreises (55) erzeugt, wenn sein Zählwert den Wert m-n überschreitet.

## Claims

1. A method of remote signalling by substituting a message for data in a digital stream conveyed by a transmission link, the method consisting in transmitting the signalling by means of a digital message at the same data rate as the digital stream, characterized in that the message is formed by consecutive sequences of three possible kinds and of identical duration, a first kind of sequence being obtained from the second sub-harmonic of the clock signal recovered from the digital stream, and being constituted by repeating a binary pattern of alternating ones and zeros, a second kind of sequence being obtained by means of the fourth sub-harmonic of the recovered clock signal and being constituted by repeating a binary pattern of alternating pairs of ones and zeros, and a third kind of sequence being obtained by logically combining the second and fourth sub-harmonics of the digital stream clock rate signal.

2. A method according to claim 1, characterized in that the remote signalling message is constituted by an invariant prefix constituted by one of the kinds of sequence, and by a suffix which is built up from the other two kinds of sequence, with the specific combination of the two kinds of sequence within the suffix encoding remote signalling data.

3. An apparatus for performing the method according to claim 1 on a digital link including at least an equipment fitted with a circuit (6') for detecting and handling alarms and with a circuit (3) for recovering the bit rate from the digital stream, characterized in that it comprises at least one transmission circuit (7) for transmitting a remote signalling message located in said equipment and including:

- a first generator generating a four-bit binary 0101 type pattern, constituted by a divide-by-two circuit (10) operating on the clock signal delivered by the bit rate recovery circuit (3),

- a second generator generating a four-bit binary 0011 type pattern, constituted by a divide-by-two circuit (14) operating on the output signal from the first binary pattern generator,

- a third generator generating a four-bit binary 1000 type pattern, constituted by a logic gate (16) operating on the output signals from the first and second binary pattern generators, and

- a selector circuit of the three binary pattern generators (11, 15, 16, 17) connected to the outputs from the three binary pattern generators and having first and second binary control inputs (12, 13),

- switch means (18) enabling the signal from the selector circuit to be momentarily inserted in the place of the digital data stream conveyed by said link,

- a multiplexer (20) having its inputs adapted to logic levels which encode a remote signalling information, and having its output connected to control the second control input (13) of the selector circuit,

- a sequencer (21) which is triggered by the circuit (6') for detecting and handling alarms, and which is clocked at a rate equal to a sub-multiple of one-fourth of the rate of the clock signal delivered by the bit rate recovery circuit (3), said sequencer being adapted to ensure the arrangement of the sequences within a remote signalling message by controlling the addressing of the multiplexer and the first control input (12) of the selector circuit, and being adapted to generate an end of remote signalling signal, and

- a bistable circuit (19) triggered by the circuit (6') for detecting and handling alarms and returned to a rest condition by the sequencer (21) by means of its end of remote signalling signal, said bistable circuit controlling the addressing of the switch means (18) in such a manner as to cause the output signal from the pattern generator selector circuit to be inserted into the digital stream while the bistable circuit is in its triggered state.

4. An apparatus for performing the method according to claim 2 on a digital link including at least one equipment fitted with a circuit (45) for exploiting remote signalling and with a circuit (43) for recovering the bit rate from the digital stream, characterized in that it comprises at least one message receiver circuit placed in said equipment and comprising:

- a prefix recognition circuit (50) to which the digital stream conveyed by the link is applied,

- an end of prefix detector circuit (60) triggered by the prefix recognition circuit (50),

- a circuit (70) for identifying and discriminating suffix sequences, which receives the digital stream conveyed by the link and put into action under the control of the end of prefix detector circuit (60),

- an end of suffix detector circuit (80) placed after the circuit (70) for identifying and discriminating suffix sequences and controlling re-initialization of the end of prefix detector circuit (60), and

- a sample and store circuit (90) placed after the circuit (70) for identifying and discriminating suffix sequences, which circuit (90) stores the bits of the remote signalling message while said message is being received and decoded by the aforementioned latter circuit.

5. An apparatus according to claim 4, characterized in that the prefix recognition circuit (50) comprises a circuit for recognizing n prefix sequence patterns out of a possible m patterns, and comprising:

- a serial input/parallel output shift register (51) connected to receive the digital data stream conveyed by the link, clocked by the clock signal generated by the circuit (43) for recovering the bit rate, and delivering binary words at its parallel output which are equal in length to the length of a pattern;

- a comparator (52) for comparing two pattern-length binary numbers, one of said numbers being hardwired and identical to a prefix sequence pattern, and the other being delivered by the parallel output of the shift register (51),

- a trigger circuit (53) activated by the comparator (52) when the compared numbers are identical,

- a pattern rate generator constituted by a divider (54) operating on the signal from the bit rate recovery circuit (43) and held in a zero state by the trigger circuit (53) while this circuit is in its rest state,

- a coincidence detector (55) connected to the output from the comparator (52) and from the pattern rate generator and delivering on two distinct outputs instructions for counting the presence and for counting the absence of pattern,

- a n counter (56) adapted to count the pattern presence count instructions as delivered by the coincidence detector (55), said n counter being held to a zero state by the trigger circuit (53) while this circuit is in its rest state, and generating a prefix detection signal when its count reaches or exceeds n, and

- an m-n counter (57) adapted to count the pattern absence count instructions delivered by the coincidence detector (55), said m-n detector being held in a zero state by the trigger circuit (55) while this circuit is in its rest state, and delivering a signal for returning the trigger circuit (55) to its rest state when its count exceeds m-n.

# FIG. 1

FIG. 2

EP 0 184 108 B1

FIG. 3